# EUROPÄISCHE PATENTSCHRIFT

(11) **EP 3 676 233 B1**
(45) Veröffentlichungstag und Bekanntmachung des Hinweises auf die Patenterteilung: **30.04.2025**
(21) Anmeldenummer: 18759575.6
(22) Anmeldetag: 14.08.2018
(51) Int. Cl.: C04B 28/04, C04B 28/34, C04B 28/06, B29C 70/14, C04B 111/34

(54) **VERFAHREN ZUR HERSTELLUNG EINES VERBUNDWERKSTOFF, DAMIT HERGESTELLTER VERBUNDWERKSTOFF UND SEINE VERWENDUNG**
PROCESS FOR MANUFACTURE OF A COMPOSITE MATERIAL, MANUFACTURED COMPOSITE MATERIAL AND ITS USE
PROCÉDÉ DE PRODUCTION D'UN MATÉRIAU COMPOSITE, LE MATÉRIAU COMPOSITE PRODUIT ET SON UTILISATION

(30) Priorität: 01.09.2017 DE 102017215298
(43) Veröffentlichungstag der Anmeldung: 08.07.2020
(73) Patentinhaber: Robert Bosch GmbH, 70442 Stuttgart (DE)
(72) Erfinder: HEJTMANN, Georg, 74395 Mundelsheim (DE); SCHUETT, Klaus-Volker, 73249 Wernau (DE); SEDLMAYR, Andreas, 75173 Pforzheim (DE); KAESSNER, Stefan, 71149 Bondorf (DE)
(86) Internationale Anmeldenummer: PCT/EP2018/072044
(87) Internationale Veröffentlichungsnummer: WO 2019/042764

(56) Entgegenhaltungen:
- WO-A1-2014/029658
- WO-A1-2014/180625
- DE-A1- 102005 028 902
- DE-A1- 102015 223 449
- US-A- 5 275 655
- US-A- 5 851 634
- US-A1- 2016 340 251

## Beschreibung

Die vorliegende Erfindung betrifft einen Verbundwerkstoff. Dieser kann insbesondere als Gehäuse für einen Akkumulator und/oder als Bestandteil eines elektronischen Bauelements, Bauteils oder einer Baugruppe verwendet werden. Weiterhin betrifft die vorliegende Erfindung ein Verfahren zur Herstellung des Verbundwerkstoffs.

### Stand der Technik

Das Gehäuse von Akkumulatoren kabelloser Bohrmaschinen und vergleichbarer Werkzeuge besteht in der Regel aus organischen Polymermassen. Diese weisen zwar eine gute mechanische Stabilität auf, können die durch den Akkumulator entstehende Wärme jedoch nur unzureichend ableiten.

Es ist bekannt, dass ein Akkumulator bei optimierter Wärmeableitung eine erhöhte Lebensdauer erzielt. Um die Wärmeableitung zu verbessern, können wärmeleitende keramische Füllstoffe in organischen Polymermassen eingebracht werden. Aufgrund der Verarbeitbarkeit der organischen Polymermassen kann jedoch nur eine kleine Menge dieser wärmeleitenden keramischen Füllstoffe in sie eingebracht werden.

Reine Keramik-Zement-Verbundstoffe weisen eine sehr gute Wärmeableitung auf. Diese haben beim Einsatz als Gehäuse eines Akkumulators jedoch den Nachteil, dass sie sehr spröde sind. Außerdem verursacht ihr Zementanteil eine Porosität solcher Verbundwerkstoffe, wodurch hohe Anforderungen an die Dichtigkeit des Gehäuses nicht erfüllt werden können.

Auch in elektronischen Bauelementen, Bauteilen und Baugruppen ist eine hohe Wärmeableitung wünschenswert. Diese kann durch organische Polymermassen jedoch ebenfalls nur unzulänglich bzw. mit schlechten Verarbeitungseigenschaften bei deutlich höheren Materialkosten erreicht werden. Gleichzeitig ist der Einsatz bei einer Temperatur oberhalb von 200 °C meist kritisch für solche Polymermassen. Keramik-Zement-Verbundwerkstoffe sind auch für diese Anwendung teilweise zu spröde und oder zu permeabel.

Die US 5,275,655 A beschreibt eine Zementzusammensetzung mit haftungsreduzierter Oberfläche. Diese beinhaltet 25 bis 45 Gew.% mineralische Füllstoffe, 25 bis 45 Gew.% einer Zementmatrix, 10 bis 20 Gew.% eines polymeren Bindemittels und 5 bis 15 Gew.% eines Fluorpolymers.

Die WO 2014/029658 A1 beschreibt eine Zementzusammensetzung für das Bauwesen. Diese enthält 50 bis 80 Gew.% Füllstoffe und Sände, 15 bis 40 Gew.%, Zement und 0,1 bis 3,5 Gew.% eines Polymers.

Die US 2016/0340251 A1 beschreibt Zementformulierungen auf der Grundlage von Portlandzement und Calciumaluminat-Zement. In einigen Formulierungen sind neben dem Zement jeweils Füllstoffe wie beispielsweise Aluminiumoxid und ein Ethylen-Vinylacetat-Copolymer enthalten.

Die DE 10 2015 223 449 A1 beschreibt eine elektrische Vorrichtung mit einer Umhüllmasse. Die Umhüllmasse weist ein Schichtsystem aus mehreren diskreten Schichten auf, die jeweils eine Zementmasse enthalten. Der Zement kann keramische Partikel als Füllstoffe enthalten. Weiterhin kann er ein Polymer als Füllstoff enthalten.

In der US 5,851,634 A werden anorganisch gefüllte Verbundmaterialien beschrieben. Diese umfassen eine anorganisch gefüllte Matrix, die eine homogene Mischung aus Aggregat und organischem Bindemittel enthält. Die Matrix wird aus einer anorganisch gefüllten Mischung gebildet, die Wasser, ein wasserdispergierbares organisches Polymerbindemittel und ein anorganisches Aggregatmaterial enthält. Dabei umfasst das Aggregat beispielsweise Aluminiumoxid und einen Zement. An der Oberfläche der anorganisch gefüllten Matrix kann ein Beschichtungsmaterial aufgebracht sein.

WO 2014/180625 A1 offenbart ein Verfahren zur Herstellung von Kunststoffformteilen mit erhöhter Wärmeleitfähigkeit, umfassend das Formen eines Formteils durch Spritzgießen einer Mischung aus einem Polymer ausgewählt ist aus der Gruppe bestehend aus Polypropylen, Polyethylen, Polyurethan, Polycarbonat, Polyester, Polyphenylensulfid, Polyetheretherketon, und Polyamid und wärmeleitfähigen Füllstoffteilchen, wobei der Füllstoff aus einer elektrischen nichtleitenden Verbindung besteht, bevorzugt aus Bornitrid. Das Formteil kann ein Gehäuse für elektronische Bauteile sein.

Offenbarung der Erfindung Der erfindungsgemäße Verbundwerkstoff ist nach einem der nachfolgend beschriebenen Verfahren hergestellt. Dieser Verbundwerkstoff weist aufgrund seines hohen Anteils keramischer Füllstoffe eine gute Wärmeleitfähigkeit auf. Die Kombination der keramischen Füllstoffe mit dem Zement ermöglicht ein Auffüllen mit dem mindestens einen Polymer, ohne die Verarbeitbarkeit stark zu beeinträchtigen. Dieses Polymer füllt Poren in der Struktur des Zements und verbessert so dessen mechanische Stabilität und wirkt gleichzeitig seiner Sprödigkeit und Porosität entgegen. Es wird also auch die Permeabilität / Wasseraufnahme gesenkt.

Unter einem Zement wird hierbei jede anorganische Verbindung und jedes Gemisch anorganischer Verbindungen verstanden, die bzw. das mit Wasser unter Bildung von Hydratphasen hydraulisch abbindet. Insbesondere Tonerdezemente, Portlandzemente und Phosphatzemente sind als Bestandteile des Verbundwerkstoffs geeignet.

Das mindestens eine Polymer macht 1 bis 20 Vol.-% des Verbundwerkstoffs aus.

Hierdurch wird einerseits gewährleistet, dass das Polymer die Porosität, die Sprödigkeit und die daraus resultierende geringe mechanische Stabilität des Zements kompensiert, andererseits wird die Wärmeleitfähigkeit des Verbundwerkstoffs jedoch im Wesentlichen durch den Zement und die keramischen Füllstoffe nicht aber das Polymer bestimmt.

Für den Verbundwerkstoff bevorzugte Polymere sind ausgewählt aus der Gruppe, die aus Polysiloxanen bzw. Silikonen, Epoxidharzen, Polyurethanharzen, Vinylacetat-Ethylen-Copolymeren und Gemischen daraus besteht. Diese Kunstharze bzw. harzähnlichen Verbindungen sind besonders gut geeignet, um den Verbundwerkstoff die nötige Elastizität zu geben, um die sonst eher spröden Eigenschaften des Zements und der keramischen Füllstoffe zu kompensieren.

Die zur Steigerung der Wärmeleitfähigkeit vorgesehenen keramischen Füllstoffe sind bevorzugt aus der Gruppe ausgewählt, die aus Oxiden, Nitriden, Carbiden und Gemischen daraus besteht. Bei den Oxiden handelt es sich insbesondere um Aluminiumoxid. Bei den Nitriden handelt es sich insbesondere um Aluminiumnitrid, Bornitrid oder Siliziumnitrid. Bei den Carbiden handelt es sich insbesondere um Siliziumcarbid oder Wolframcarbid. Diese keramischen Füllstoffe steigern nicht nur die Wärmeleitfähigkeit des Verbundwerkstoffs, sondern erfüllen auch elektrische Isolationsanforderungen, die an den Verbundwerkstoff gestellt werden können, wenn er als Bestandteil elektronischer Bauelemente, Bauteile oder Baugruppen mit hohen Betriebsspannungen eingesetzt wird.

In dem Verfahren zum Herstellen des Verbundwerkstoffs wird eine Rezeptur der folgenden Zusammensetzung mit Wasser versetzt:

| | |
|---|---|
| 40 bis 85 Vol.-% | keramische Füllstoffe, |
| 14 bis 59 Vol.-% | mindestens eines Zements, |
| 1 bis 20 Vol.% | mindestens eines Polymers, |
| 0 bis 2 Vol.% | Zusatzstoffe. |

Anschließend wird die Rezeptur hydraulisch abgebunden. Bei den in der Rezeptur enthaltenen Zusatzstoffen handelt es sich insbesondere um Fließmittel, welche die Verarbeitbarkeit der Rezeptur erleichtern, wie insbesondere Polycarboxylatether (PCE), Polykondensate, polymerbasierte Entschäumer, Polysiloxane oder Benetzungsmittel.

Das mindestens eine Polymer bildet teilweise ein Polymergitter. Dieses schließt die keramischen Füllstoffe und den Zement ein. Ein solches Polymergitter, das auch als makroskopische Matrix bezeichnet werden kann, verbessert die mechanische Stabilität des Verbundwerkstoffs noch weiter.

Die Herstellung des Verbundwerkstoffs erfolgt, indem eine Zementmasse mittels Spritzgießens in das Polymergitter eingebracht wird. Das Polymergitter kann hierzu ebenfalls mittels Spritzgießens geformt werden. Um die Vorteile des Polymergitters als makroskopischer Polymermatrix mit den Vorteilen des auf mikroskopischer Ebene mit dem Zement und den keramischen Füllstoffen verbunden Polymers zu verbinden, wird als Zementmasse die voranstehend beschriebene Rezeptur verwendet. Der Verbundwerkstoff enthält das Polymer also sowohl in der Zementmasse als auch in der makroskopischen Matrix.

Um den Verbundwerkstoff auszuhärten und seine Wasseraufnahme zu verringern, ist es bevorzugt, ihn einer Wärmebehandlung bei einer Temperatur im Bereich von 60°C bis 350°C zu unterziehen. Dieser Temperaturbereich reicht zum einen aus, um Wasser, welches nicht mit dem Zement reagiert hat, aus dem Verbundwerkstoff auszutreiben, und er ist gleichzeitig niedrig genug, um eine thermische Verformung oder Zersetzung des Polymers zu vermeiden, welche zu einer Bildung von Rissen im Verbundwerkstoff führen könnte.

Der Verbundwerkstoff vereint eine hohe Wärmeleitfähigkeit mit einer guten mechanischen Stabilität, einer geringen Wasseraufnahme und einem hohen elektrischen Widerstand. Daher ist er insbesondere zur Verwendung als Gehäuse für einen Akkumulator und/oder als Bestandteil eines elektronischen Bauelements, eines elektronischen Bauteils oder einer elektronischen Baugruppe geeignet.

### Kurze Beschreibung der Zeichnungen

Ausführungsbeispiele der Erfindung sind in den Zeichnungen dargestellt und werden in der nachfolgenden Beschreibung näher erläutert.
- Fig. 1: zeigt eine schematische Darstellung einer mikroskopischen Matrix eines Verbundwerkstoffs.
- Fig. 2: vergleicht in einem Diagramm die Wasseraufnahme der mikroskopischen Matrix von Verbundwerkstoffen.
- Fig. 3: vergleicht in einem Diagramm die thermische Dehnung der mikroskopischen Matrix eines Verbundwerkstoffs mit mehreren herkömmlichen Werkstoffen.
- Fig. 4: zeigt schematisch einen Verbundwerkstoff gemäß einem Ausführungsbeispiel der Erfindung.

### Ausführungsbeispiel der Erfindung

Gemäß der folgenden Tabelle 1 wurden zwei Rezepturen B1 und B2 zur Herstellung von zwei Beispielen der mikroskopischen Matrix von Verbundwerkstoffen . Weiterhin wurden zwei Rezepturen VB1 und VB2 zur Herstellung von zwei Vergleichsbeispielen herkömmlicher Verbundwerkstoffe hergestellt.

**Tabelle 1**

| | | | **Beispiel** | | | | |
|---|---|---|---|---|---|---|---|
| | | | **VB1** | **VB2** | | **B1** | **B2** |
| | | | | | | | |
| Tonerdezement | [Vol.%] | | 23,5 | 21,65 | | 17,5 | 16,3 |
| Aluminiumoxid | [Vol.%] | | 49,5 | 51,7 | | 49,5 | 51,7 |
| Fließmittel | [Vol.%] | | 1,0 | 0,65 | | 1,0 | 0,65 |
| Polysiloxanharz | [Vol.%] | | | | | 6,0 | |
| Polymerdispersion | [Vol.%] | | | | | | 5,35 |
| Wasser | [Vol.%] | | 26,0 | 26,0 | | 26,0 | 26,0 |

Als Fließmittel wurde ein Gemisch aus einem Polycarboxylatether und einem Entschäumer verwendet. Als Polymerdispersion wurde eine gesättigte Dispersion eines Vinylacetat-Ethylen-Copolymers verwendet.

Alle Rezepturen wurden hydraulisch abgebunden, um Probekörper zu erhalten.

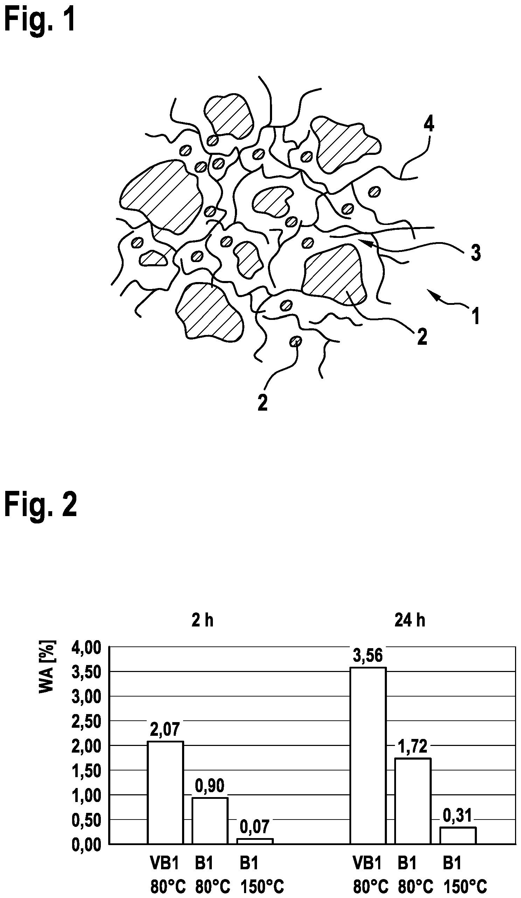

Fig. 1 zeigt die Struktur von mikroskopischen Matrizen 1 von Verbundwerkstoffen, die gemäß den Rezepturen B1 und B2 hergestellt werden konnten, so wie sie im Schliffbild teilweise mittels Lichtmikroskopie oder Rasterelektronenmikroskopie dargestellt bzw. durch Quecksilberdruckporosimetrie oder Widerstandsmessungen indirekt nachgewiesen werden können. Es ist erkennbar, dass die keramischen Füllstoffe 2 in Form unterschiedlich großer Aluminiumoxidpartikel in der Zementmatrix 3 zusammen mit einer mikroskopischen organischen Matrix aus dem jeweiligen Polymer 4, also aus einem Polysiloxan bzw. dem Copolymer aus Vinylacetat-Ethylen, eingebettet sind.

Verbundwerkstoffe, die gemäß den Rezepturen VB1 und B1 hergestellt wurden, wurden jeweils zunächst 48 Stunden lang bei einer Temperatur von 60°C ausgehärtet, dann bei einer Temperatur von 80°C getrocknet und anschließend mehr als 24 Stunden lang bei 22°C gelagert. Jeweils eine Probe des gemäß der Rezeptur B1 hergestellten Verbundwerkstoffs wurde nach dem Trocknen und vor der Lagerung bei Raumtemperatur einer einstündigen Wärmebehandlung bei einer Temperatur von 150°C unterzogen. Alle Proben wurden anschließend unter Wasser gelagert und ihre prozentuale Wasseraufnahme WA wurde jeweils nach zwei Stunden und nach 24 Stunden mittels Wiegen ermittelt. Wie in Fig. 2 dargestellt ist, weist der Verbundwerkstoff eine wesentlich geringere Wasseraufnahme auf als ein herkömmlicher Keramikzementverbundwerkstoff, welcher kein Polymer enthält. Dieser kann durch die Wärmebehandlung noch einmal wesentlich verbessert werden und liegt dann im Bereich von Silikonvergussmassen. Es konnte also gezeigt werden, dass der Verbundwerkstoff in seiner Wasseraufnahme die guten Eigenschaften des in ihm enthaltenen Polymers und nicht die schlechten Eigenschaften des darin enthaltenen Zements aufweist.

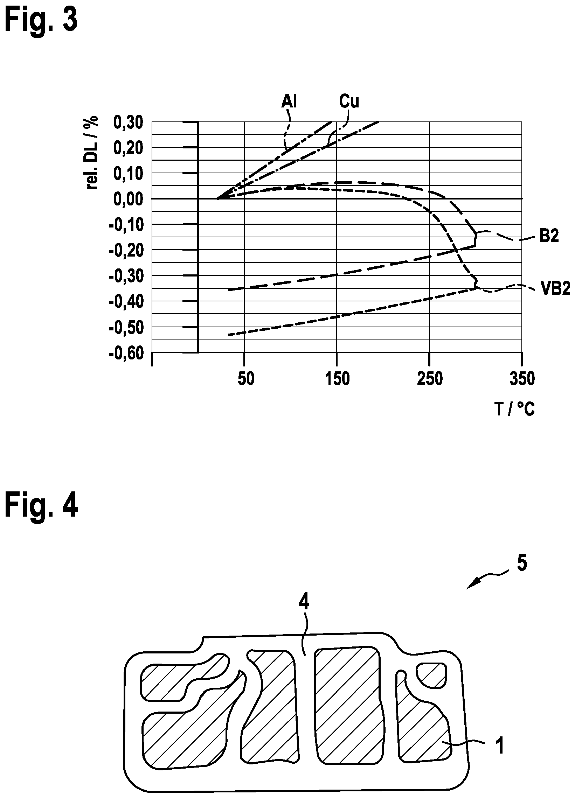

Jeweils eine Probe von Verbundwerkstoffen, welche gemäß den Rezepturen VB2 und B2 hergestellt wurden, wurde beginnend bei einer Temperatur von 22°C im ungetrockneten Zustand mit einer Geschwindigkeit von 2°C pro Minute auf eine Temperatur von 300°C erhitzt und dann wieder auf die Ausgangstemperatur abgekühlt. Die prozentuale Dehnung rel. DL der Verbundwerkstoffe beim Erhitzen und beim Abkühlen ist in Fig. 3 dargestellt. Der Verbundwerkstoff weist dabei eine deutlich geringere thermische Schwindung auf als ein herkömmlicher Keramik-Zement-Verbundwerkstoff, der kein Polymer enthält. Damit konnte gezeigt werden, dass ein solcher Verbundwerkstoff gegenüber metallischen Substraten, wie sie in elektronischen Bauelementen, Bauteilen und Baugruppen auftreten, eine geringere Spannung an den Grenzflächen aufweist als der herkömmliche Verbundwerkstoff. Hierzu ist in Fig. 3 auch die thermische Dehnung von Aluminium und Kupfer dargestellt. Es ist auch eine bessere Haftung des Verbundwerkstoffs unter Temperatureinfluss zu erwarten als diese mittels des herkömmlichen Verbundwerkstoffs erreicht werden kann.

Fig. 4 zeigt schematisch einen mechanisch besonders stabilen Verbundwerkstoff 5 gemäß einem Ausführungsbeispiel der Erfindung. Dieser wird hergestellt, indem mittels Spritzgießens die Rezeptur B1 oder B2 in ein Polymergitter als makroskopische Polymermatrix eingebettet wird. Als Polymer wird im Falle der Rezeptur B1 Polysiloxan und im Falle der Rezeptur B2 Vinylacetat-EthylenCopolymer verwendet. Der Verbundwerkstoff 5 besteht also aus einer mikroskopischen Matrix 1, welche keramische Füllstoffe, ein Zement und das Polymer aufweist und der seinerseits noch einmal in einer makroskopischen Matrix aus dem Polymer 4 eingebettet ist.

Die gemäß des voranstehend beschriebenen Ausführungsbeispiels der Erfindung aus den Rezepturen B1 und B2 herstellbaren Verbundwerkstoffe 5 können als Gehäuse eines Akkumulators einer kabellosen Bohrmaschine oder auch als Bestandteil eines elektronischen Halbleiterbauelements, eines elektronischen Halbleiterbauteil oder einer elektronischen Halbleiterbaugruppe verwendet werden.

## Patentansprüche

1. Verfahren zum Herstellen eines Verbundwerkstoffs (5), indem eine Zementmasse mittels Spritzgießens in ein Polymergitter eingebracht wird, wobei als Zementmasse eine Rezeptur der folgenden Zusammensetzung mit Wasser versetzt wird:
40 bis 85 Vol.-% keramische Füllstoffe (2),
14 bis 59 Vol.-% mindestens eines Zements (3),
1 bis 20 Vol.% mindestens eines Polymers (4),
0 bis 2 Vol.% Zusatzstoffe, jeweils bezogen auf 100 Vol.-% des Verbundwerkstoffs (5), und die Rezeptur anschließend hydraulisch abgebunden wird.

2. Verfahren nach Anspruch 1, **dadurch gekennzeichnet, dass** das Polymer (4) ausgewählt ist aus der Gruppe, bestehend aus Polysiloxanen, Epoxidharzen, Polyurethanharzen, Vinylacetat-Ethylen-Copolymeren und Gemischen daraus.

3. Verfahren nach Anspruch 1 oder 2, **dadurch gekennzeichnet, dass** die keramischen Füllstoffe (2) ausgewählt sind aus der Gruppe, bestehend aus Oxiden, Nitriden, Carbiden und Gemischen daraus.

4. Verfahren nach einem der Ansprüche 1 bis 3 **dadurch gekennzeichnet, dass** der Verbundwerkstoff (5) einer Wärmebehandlung bei einer Temperatur im Bereich von 60°C bis 350°C unterzogen wird.

5. Verbundwerkstoff hergestellt nach einem der Verfahren gemäß der Ansprüche 1 bis 4.

6. Verwendung eines Verbundwerkstoffs (5) nach Anspruch 5 als Gehäuse für einen Akkumulator und/oder als Bestandteil eines elektronischen Bauelements, eines elektronischen Bauteils oder einer elektronischen Baugruppe.

## Claims

1. Process for producing a composite material (5) by injecting a cement composition into a polymer lattice by means of injection moulding, wherein as the cement composition a formulation having the following composition is admixed with water:
40 to 85% by volume of ceramic fillers (2),
14 to 59% by volume of at least one cement (3),
1 to 20% by volume of at least one polymer (4),
0 to 2% by volume of additives,
based in each case on 100% by volume of the composite material (5), and then hydraulically setting the formulation.

2. Process according to Claim 1, **characterized in that** the polymer (4) is selected from the group consisting of polysiloxanes, epoxy resins, polyurethane resins, vinyl acetate-ethylene copolymers and mixtures thereof.

3. Process according to Claim 1 or 2, **characterized in that** the ceramic fillers (2) are selected from the group consisting of oxides, nitrides, carbides and mixtures thereof.

4. Process according to any of Claims 1 to 3, **characterized in that** the composite material (5) is subjected to a heat treatment at a temperature in the range from 60°C to 350°C.

5. Composite material produced by one of the processes according to Claims 1 to 4.

6. Use of a composite material (5) according to Claim 5 as a housing for a rechargeable battery and/or as a constituent of an electronic component, an electronic structural part or an electronic assembly.

## Revendications

1. Procédé de production d'un matériau composite (5) par introduction d'une masse cimentaire dans un réseau polymère par moulage par injection, en tant que masse cimentaire une formule de composition suivante étant additionnée d'eau :
40 à 85 % en volume de charges céramiques (2),
14 à 59 % en volume d'au moins un ciment (3),
1 à 20 % en volume d'au moins un polymère (4),
0 à 2 % en volume d'additifs,
chaque fois par rapport à 100 % en volume du matériau composite (5), et la formule est ensuite soumise à une prise hydraulique.

2. Procédé selon la revendication 1, **caractérisé en ce que** le polymère (4) est choisi dans le groupe constitué par les polysiloxanes, résines époxydiques, résines polyuréthane, copolymères éthylène-acétate de vinyle et des mélanges de ceux-ci.

3. Procédé selon la revendication 1 ou 2, **caractérisé en ce que** les charges céramiques (2) sont choisies dans le groupe constitué par des oxydes, nitrures, carbures et des mélanges de ceux-ci.

4. Procédé selon l'une quelconque des revendications 1 à 3, **caractérisé en ce que** le matériau composite (5) est soumis à un traitement thermique à une température de 60 °C à 350 °C.

5. Matériau composite produit conformément à un procédé selon les revendications 1 à 4.

6. Utilisation d'un matériau composite (5) selon la revendication 5, en tant que boîtier pour un accumulateur et/ou en tant que constituant d'un composant électronique, d'un élément constitutif électronique ou d'un bloc électronique.
